# EUROPEAN PATENT SPECIFICATION

(11) **EP 4 157 754 B1**
(45) Date of publication and mention of the grant of the patent: **30.04.2025**
(21) Application number: 22751353.8
(22) Date of filing: 13.07.2022
(51) Int. Cl.: B65G 1/04, B65G 1/137

(54) **STORAGE SYSTEM WITH LIFT**
LAGERSYSTEM MIT AUFZUG
SYSTÈME DE STOCKAGE DOTÉ D'UN ASCENSEUR

(30) Priority: 13.10.2021 EP 21202409; 08.12.2021 EP 21212997
(43) Date of publication of application: 05.04.2023
(73) Proprietor: Kim, Irina, London W6 9AT (GB)
(72) Inventor: CHERNYKH, Ilya, 5311 Paralimni (CY)
(74) Representative: Jeck, Jonathan
(86) International application number: PCT/EP2022/069673
(87) International publication number: WO 2022/269102

(56) References cited:
- DE-A1- 102016 002 760
- US-A1- 2016 031 643
- US-A1- 2019 002 202
- US-B2- 9 020 632

## Description

The present invention relates to a storage system comprising multiple mobile storage units and to a method of transportation of the multiple mobile storage units within said storage system.

US9020632B2 discloses a storage system comprising-multiple storage levels with each multiple storage spaces for storage boxes, multiple mobile transport units for transportation of storage boxes, in each storage level a transportation network of tracks is provided on which the mobile transport units are movable within each storage level, the transportation networks of the individual storage levels are connected by a lift, the lift comprising a platform.

An object of the present invention is the provision of an alternative storage system. This object is solved by a storage system according to claim 1 and a method according to claim 9. The dependent claims concern particular embodiments of the invention.

This system is designed to ensure that trays are moved from the storage area to their processing points in a desired sequence without blocking each other and that the processed trays are returned to the storage area. Synonyms for processing point used according to the present invention can be: locations for processing objects, object processing location, operator station, treatment site, object processing point, place of objects processing, point of processing and the like.

Trays are objects such as boxes that are transportable though the storage system via mobile transport devices.

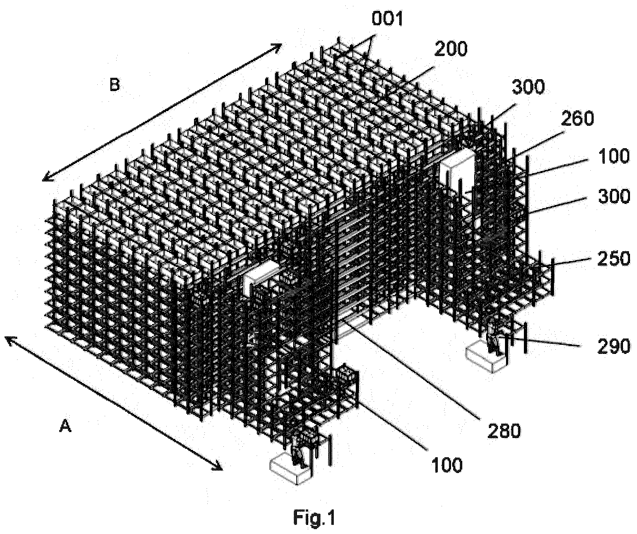

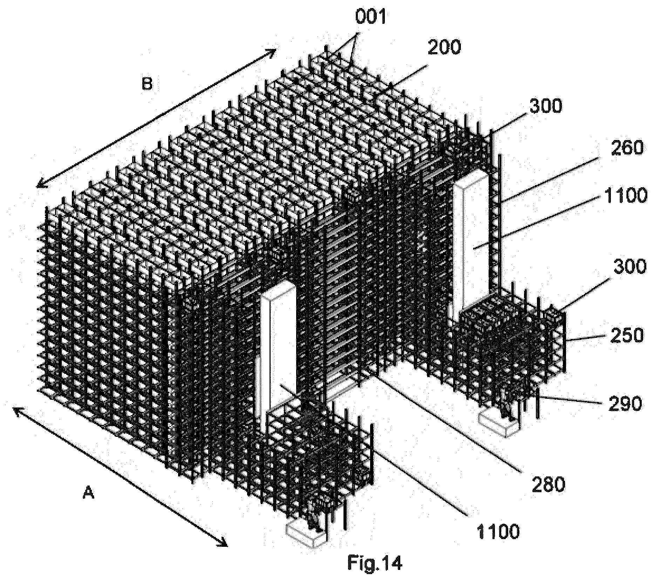

Figures 1 to 13 depict a first embodiment of the present invention. Figures 14-25 depict a second embodiment that may comprise the first embodiment. Aspects of the first and second embodiment are generally interchangeable.

According to the present invention a storage system is provided comprising multiple storage levels with each multiple storage spaces for storage boxes, multiple mobile transport units for transportation of storage boxes between the storage spaces and a processing point, which is a location for processing objects stored in said storage boxes , the processing point is located on one of the storage levels, in each storage level a transportation network of tracks is provided on which the mobile transport units are movable within each storage level, the transportation networks of the individual storage levels are connected by a lift, the lift comprising a platform with 2, 3, 4, 5, 6 or more platform levels, the number of levels of the platform is at least corresponding to the numeral of the storage level where the processing point is located, thus the platform of the lift reaches in its lowest position the lowest storage level and at least the level on which the processing point is located. The platform levels have the same distance to one another as the levels have. The platform is adapted to move vertically between the storage levels. The platform is adapted to reach with its top platform level all storage levels that are above the platform in its lowest position. The platform is adapted to carry at least two mobile transport units per platform level simultaneously.

According to a preferred embodiment the number of levels of the platform is at least one less than the number of levels of the storage system and/or the platform is accessible by the mobile transport units from at least two sides, preferably opposite sides.

According to a preferred embodiment the lift comprises a second platform with several platform levels, the platform levels have the same distance to one another as the levels of the storage space have.

A preferred embodiment of the invention can be provided by
the number of levels of the second platform is at least corresponding to the numeral of the storage level the processing point is located on.

According to a preferred embodiment the number of levels of the first platform is equal or higher than the number of levels of the second platform.

According to a preferred embodiment the second platform is adapted to move vertically between the storage levels.

According to a preferred embodiment the second platform is accessible by the mobile transport units from at least two sides, preferably three sides.

According to a preferred embodiment the platforms and the storage spaces are connected via two lanes of tracks.

According to the invention a Method of transportation of multiple mobile transport units is provided according to which while the levels of a platform are aligned with levels of the storage system, mobile transport units enter the platform from one side and/or exit the platform to an opposite side from multiple levels of the storage system at the same time the platform moves at least one level of the storage system up or down at least some of the mobile transport units that have entered the platform before leave the platform, if their destination storage system level is reached
mobile transport units that stay on the platform move towards the exit side of the platform in order to make space for further entering mobile transport units entering the platform on the new storage level.

According to a preferred embodiment a second platform is operated in the same way as the platform, but preferably only in the lower part of the storage levels, such that at least one level of the second platform aligns with the storage level on which the processing point is located thereby taking over the extra load from levels that neighbour the level of the processing point.

According to a preferred embodiment the mobile transport units are moved unidirectionally when entering, exiting and/or moving around the lift, preferably moving unidirectionally in the whole storage system.
Fig. 1 shows a section of an object storage and handling system configured to accommodate a transport mobile device equipped with lifts. The view is isometric.
Fig. 2 shows a section of an object storage and handling system configured to accommodate a transport mobile device equipped with lifts. Top view.
Fig. 3 shows a single lift integrated into the system with its adjacent transport network and part of the storage area. The view is isometric.
Fig. 4 shows one lift integrated into the system with its adjacent transport network and part of the storage area. Top view.
Fig. 5 shows a variant of the lift design. The view is isometric.
Fig. 6 shows a transport mobile device. The view is isometric.
Fig. 7 shows a transport mobile with a box. The view is isometric.
Figs. 8, 9, 10 show step by step how the multi-level load platform (MLP) lift works. Side view from the storage system side.
Figs. 11, 12, 13 show a level-by-level variant of organising the movement of the mobile transport unit (MTU) in the lift operation area. Top view.

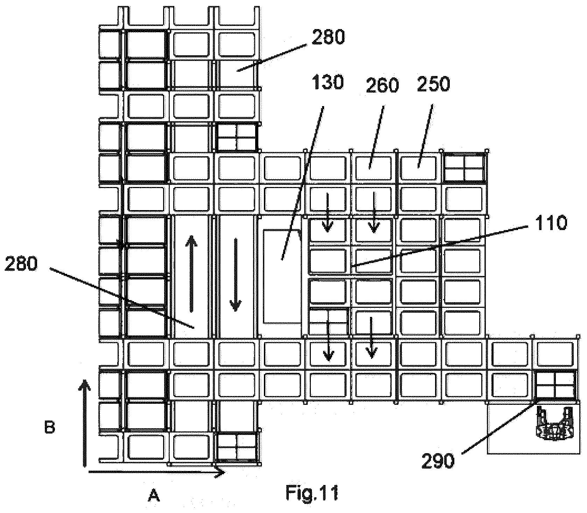

Fig. 11 shows the levels 1 and 2.

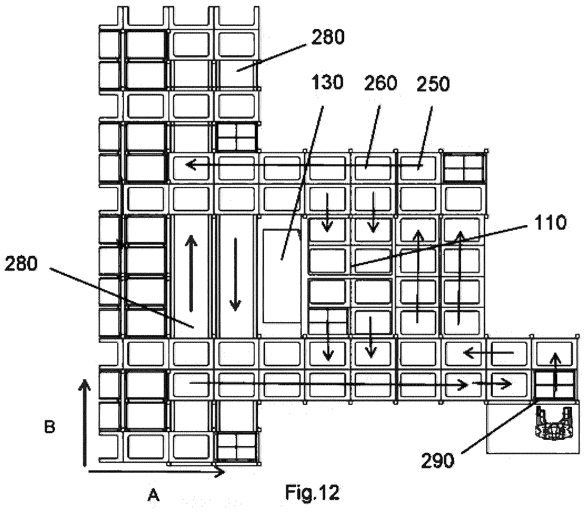

Fig. 12 shows level 3.

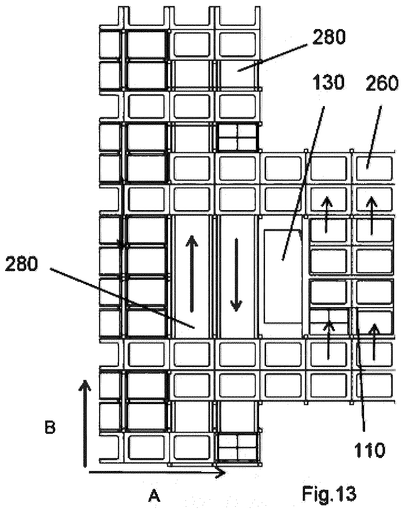

Fig. 13 shows level 4 and above.
Fig. 14 shows a section of an object storage and handling system configured to accommodate a transport mobile unit equipped with (cascade) lifts. The view is isometric.

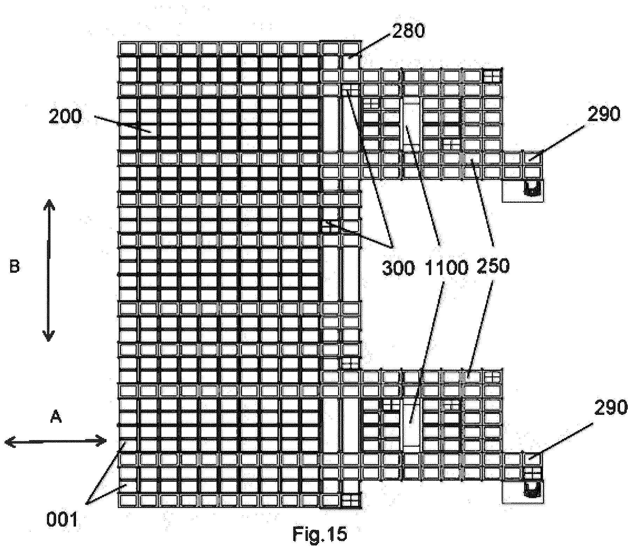

Fig. 15 shows a section of an object storage and handling system equipped with cascading lifts. The (cascade) lifts are configured to accommodate a transport mobile device. Top view.

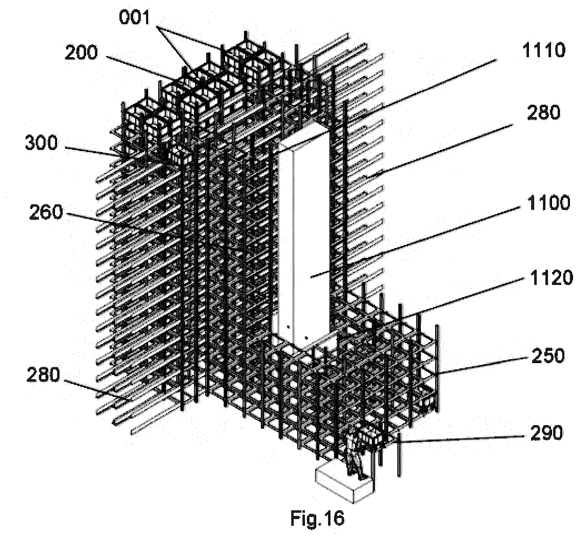

Fig. 16 shows one (cascade) lift integrated into the system with an adjacent transport network and part of the storage area. The view is isometric.

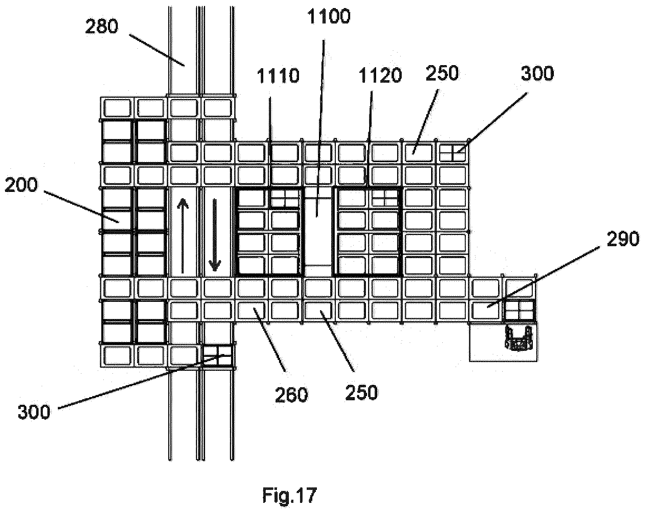

Fig. 17 shows one (cascade) lift integrated into the system with an adjacent transport network and part of the storage area. Top view.

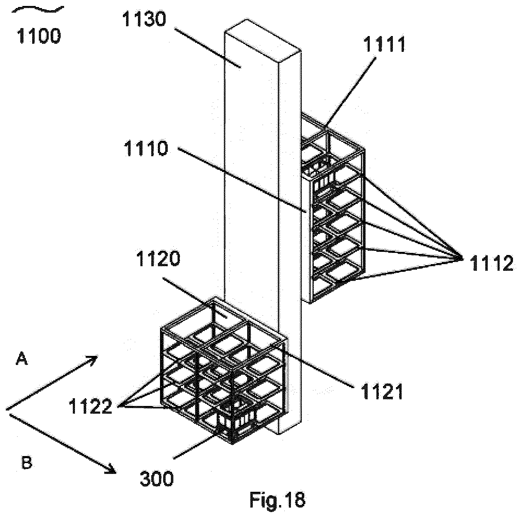

Fig. 18 shows a variant of the (cascade) lift design. The view is isometric.

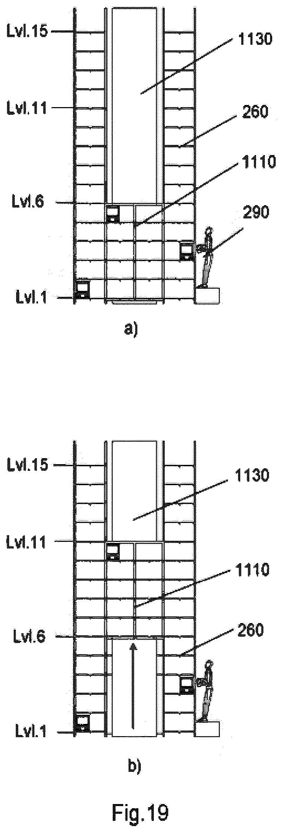

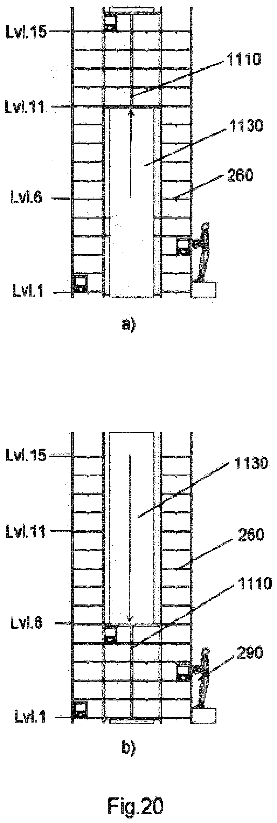

Figs. 19, 20 show step by step how the main carriage of the (cascade) lift works. Side view from the storage system side.

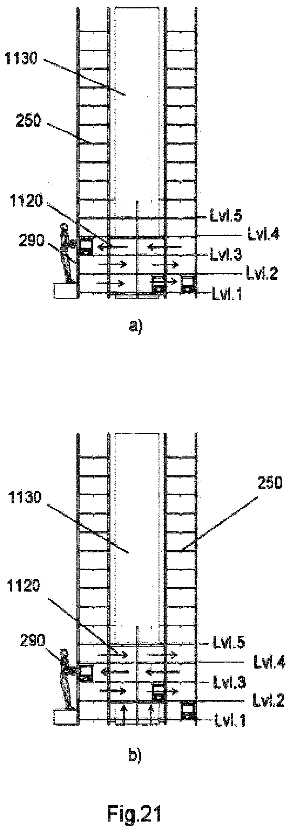

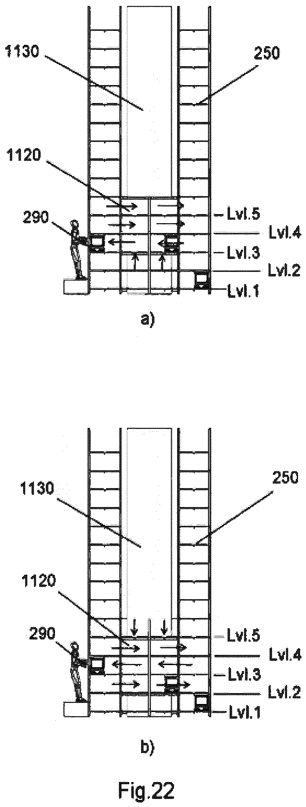

Figs. 21, 22 show step by step how the additional (cascade) carriage works. Side view.

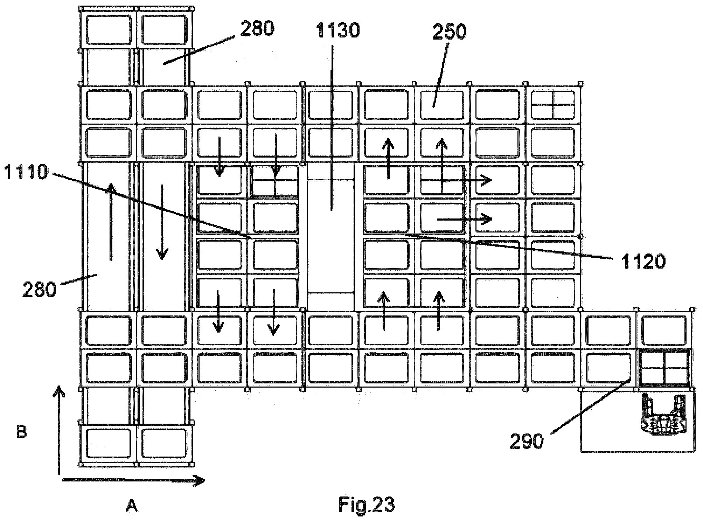

Figs. 23, 24, 25 show a tier by tier view of the **MTU** traffic in the (cascade) lift operation area. Top view.
Fig. 23 shows levels 1, 2, 4 and 5

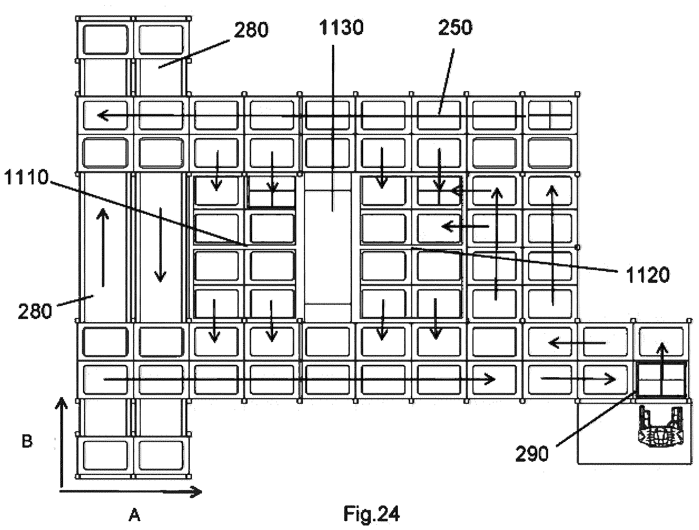

Fig. 24 shows level 3.

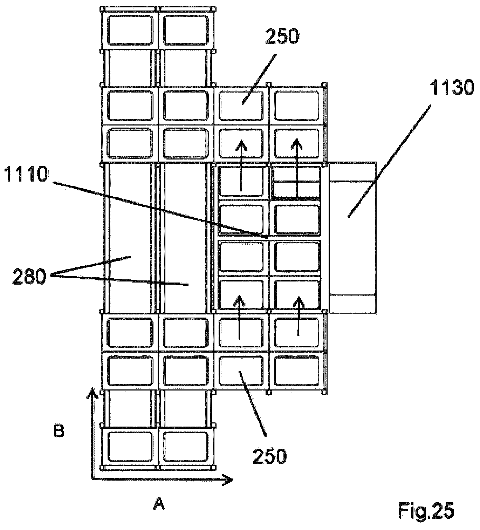

Fig. 25 shows level 6 and above.

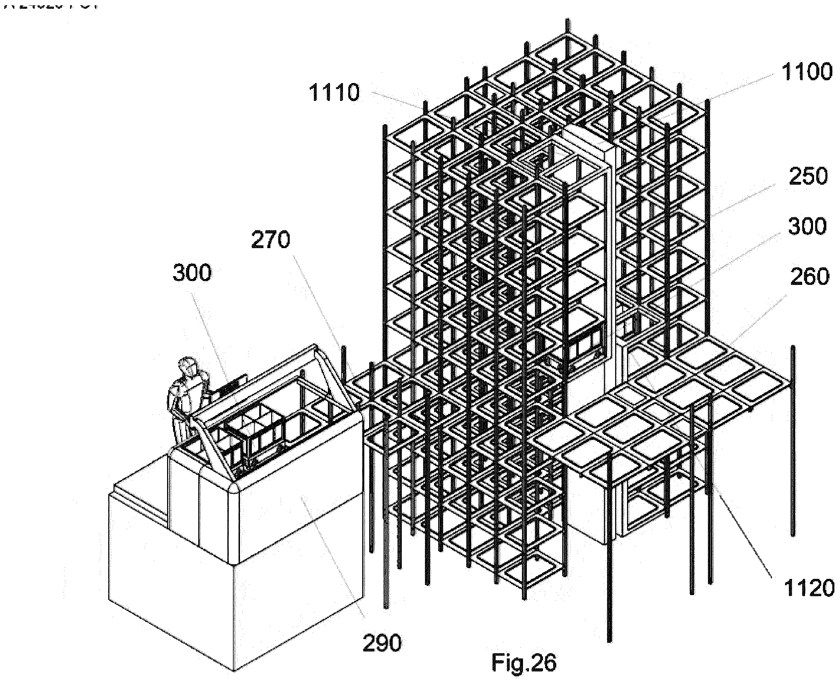

Fig. 26 shows another variant of (cascade) elevator design, integrated into the system with adjacent transport network and object processing place. The view is isometric.

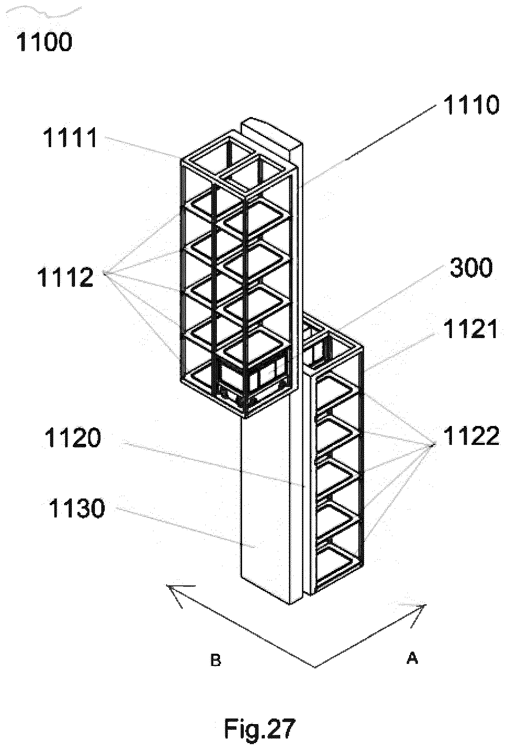

Fig. 27 shows another variant of the (cascade) elevator. The view is isometric.

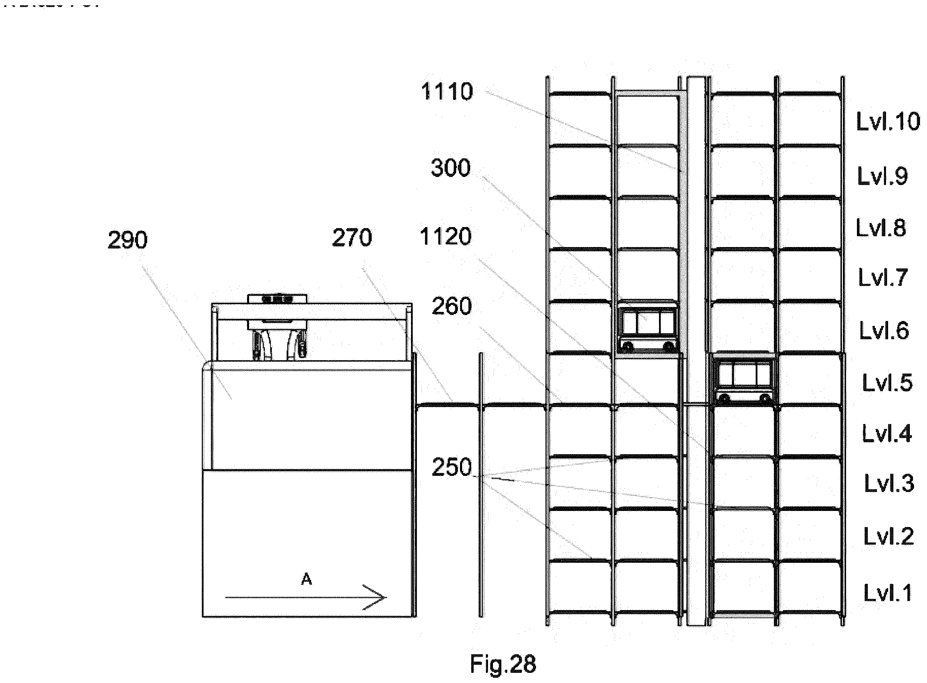

Fig. 28 shows another variant of (cascade) elevator integrated into the system with adjacent transport network and place for processing of objects. The view is a side view.

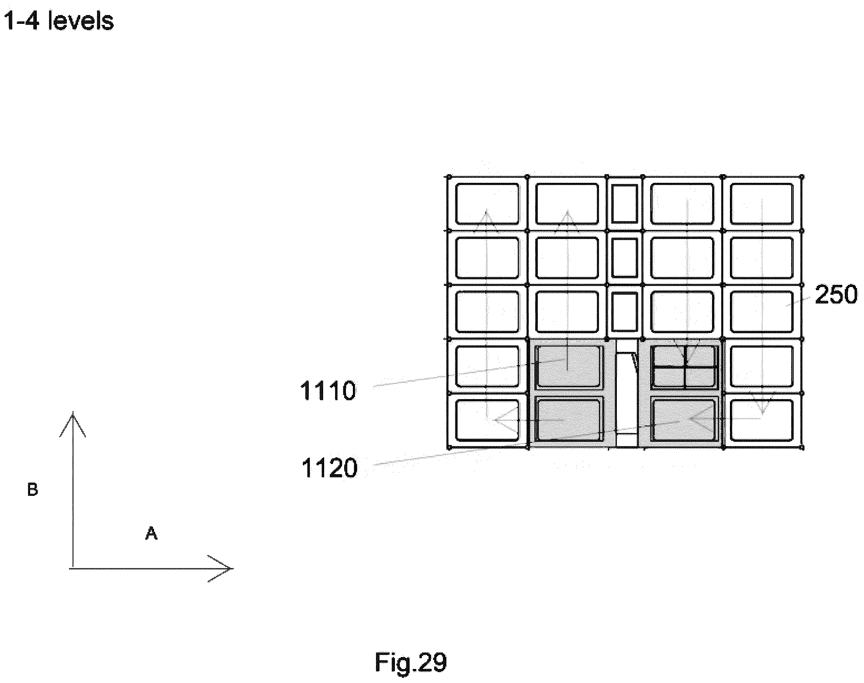

Figs. 29, 30, 31 depict a level-by-level view of organizing the movement of MTU in the (cascade) elevator operation area. The view is a top view.

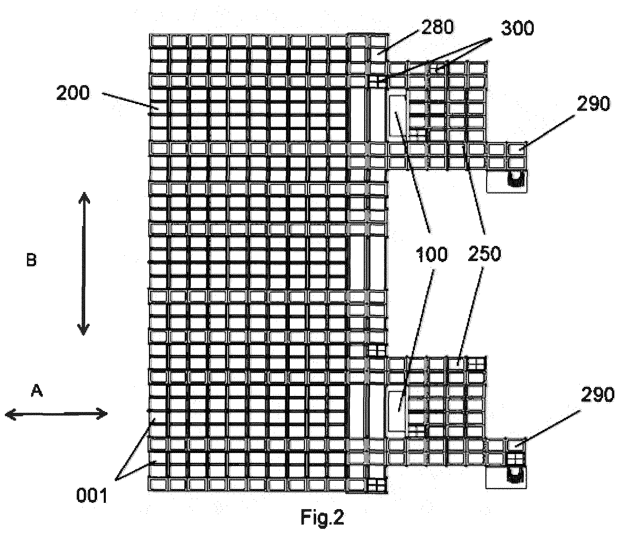

(Cascade) lifts may be defined as independently working lifts that may form a unit of transportation in proximity to each other, e.g. on opposite sides of a common vertical post or several post, preferably located in the vicinity to each other. According to the present invention. The (cascade) lifts shown e.g. in Fig. 26-31 can also be called twin lifts or simply lifts. Figures 1 and 2 show a possible variant of an (high-rise) object storage and handling system with multiple lifts (100) configured to operate at least one transport mobile units (300) (MTU). As can be seen from the figures, the object storage and handling system includes
- a multi-level storage area (200) with an integrated transport network in which multiple trays (001) with objects are arranged at the storage locations in two horizontal mutually perpendicular directions A and B,
- a plurality of transport mobile units (300) designed to independently pick up and move trays (001) containing objects in two mutually perpendicular horizontal directions A and B along the transport network both inside and outside the storage area (200),
- several lifts (100) designed to transport mobile units (300) between levels of storage area (200), connected to storage area (200) by transport networks (250) and (260) via two adaptor rows (280) designed to organize unidirectional movement each,
- several locations for processing objects (290).

The figure also shows several transport mobile units (300) located in different parts of the above system.

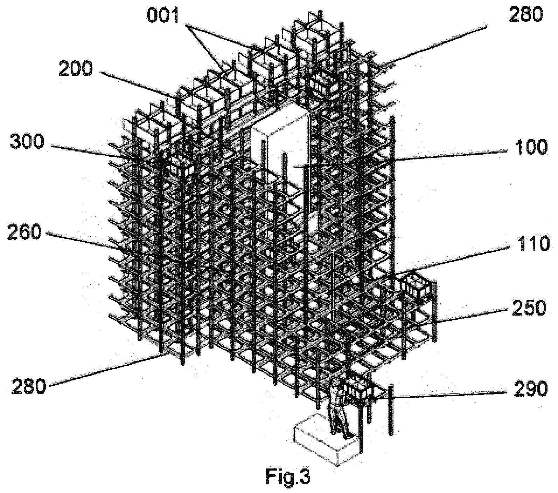

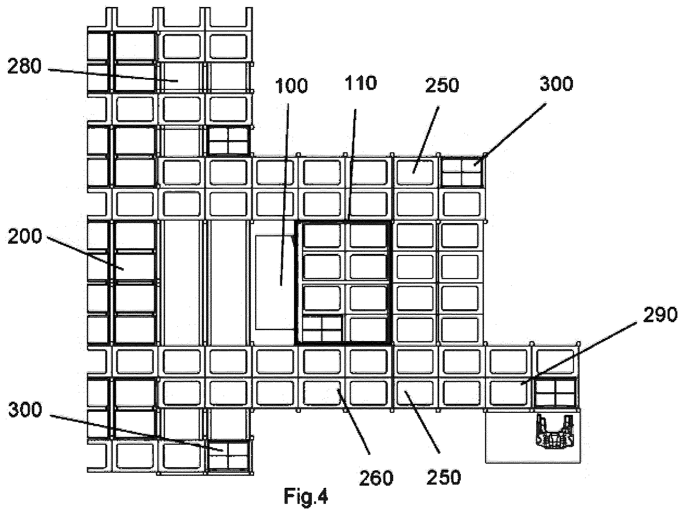

Fig. 3 and 4 show an enlargement of a single lift operating area (100) with an adjacent part of the storage area (200). The drawings show that each lift (100) has a multi-level load platform (MLP)(110). As can be seen in figure 3 the MLP (110) of the lift (100) can be located as close as possible to the one-way adaptation lanes (280) and is connected to them at all levels by a transport network (260) spread over the entire height of the storage system. At the lower levels, preferably the lower three levels of the system there is a transport network (250) through which the MTUs (300) can bypass the MLP (110) lift, adjacent to the transport network (260) and the adapting lanes (280). As can be seen in Figure 4, the transport network (260) adjoins the MLP (110) in the second horizontal direction (above and below the MLP in the figure) and the transport network (250) adjoins the MLP (110) in the first (right of the MLP in the figure) horizontal direction, thus covering it, together with the network (260), in a half ring. Both transport networks (250) and (260) have two rows each, allowing two or more transport mobile units (300) to pass each other and not only each other. On the right side of the first horizontal direction to the transport network (260), there is an operator station (290) docked preferably on the third level but can also be located on any other level.

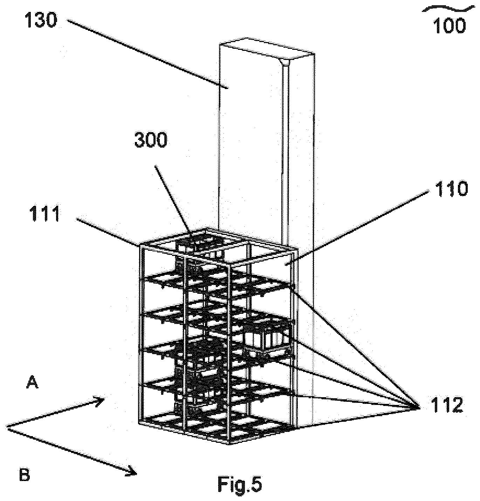

Fig. 5 depicts a variant design of the lift (100). As shown in the figure, the lift (100) may comprise a vertical post (130) serving as a device base and a vertical guide for movement of the MLP, and an MLP (110) moving vertically along the post (130). The MLP (110) of the lift is designed to move the MTU (300) between all levels of the storage system, and comprises an MLP body (111) and preferably five horizontal levels (112) attached thereto, made with vertical and horizontal steps coincident with the intervals of the transport network (260), enabling the MTU (300) to enter and exit all its horizontal levels (112) in a second horizontal direction. The area of each horizontal level (112) of the MLP (110) allows preferably up to eight or more transport mobile units (300) to be accommodated simultaneously on each level, either empty or with a tray on each of them. Dimensions of one horizontal level (112) in horizontal transport steps (n.1*n.2 = 2*4) The vertical working movement of the MLP (110) of the lift (100) allows it to move both one and many MTUs (300) at a time, between all storage levels of the system.

It is also clear from the presented invention that the lift variant (100) shown in the figure can also be made with more than one pillar and with a non-cantilevered MLP. It is also clear from the invention that the area of the horizontal MLP levels of the lift and their number can also be different.

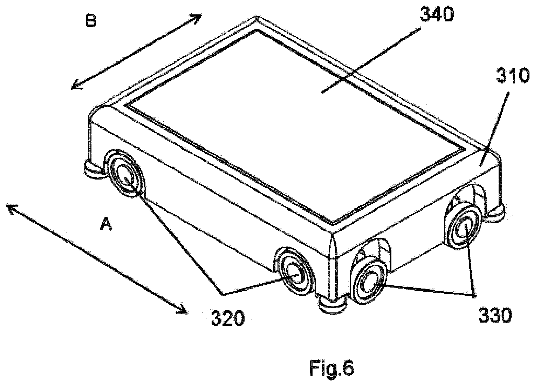

Fig. 6 depicts an empty transport mobile device (300) in a transport position for movement in the second horizontal direction. As can be seen from the figure, the transport mobile device (300) comprises a main body (310), two groups of wheels (320) and (330) serving to move the device in the first and second horizontal directions respectively, and a table (340) designed to pick up and transport trays (001) on themselves.

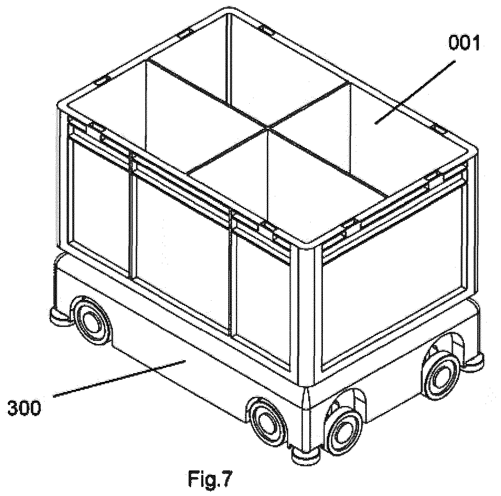

Fig. 7 shows the transport mobile unit (300) in position for moving in the second direction with the tray (001) standing on the table of the unit.

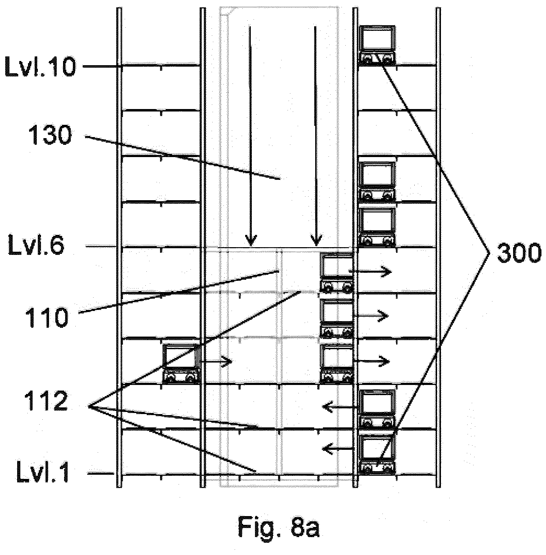

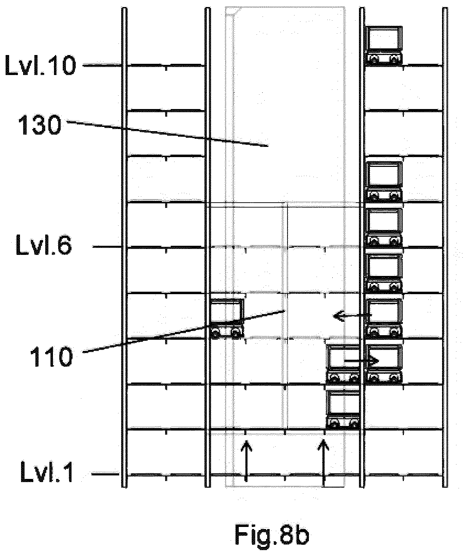

Figs. 8, 9, 10 show step by step the way of operation of MLP (110) of the lift (100), which purpose in a few vertical discrete movements provides exit to the level where preferably the processing point may be, e.g level 3 of the MTU collected from other levels in necessary sequence and allows arrival of the returning MTU to the necessary level for them.

Thus, Fig. 8a shows the MLP (110) of the lift (100) in its lowest position. In this position, the horizontal levels (112) of the MLP (110) preferably coincide with the lower five levels of the transport network (260), levels 1 to 5, allowing the transport mobile units (300), from the lift MLP to move to the adjacent transport network, according to the horizontal level occupied (112) each MTU (300) will move to a similar level of the transport network (260). As can be seen from the figure, on levels 3 to 5 the MLP generally brings in the MTUs from the upper levels of the system, while the lower 2 levels of the MLP serve to lift the MTUs from the lower two levels of the system, arriving at the lift on their own. After a portion of the MTU (300) leaves the MLP (110) of the lift (100) and the other portion of the MTU (300) conversely moves from the transport network (260) to it, the lift MLP will move without intermediate stops to the position shown in Figure 8b.

Fig. 8b shows the MLP (110) of the lift (100) in a second vertical position, with its horizontal levels (112) corresponding to levels 2 to 6 of the storage system. In this way, the MTUs (300) at the lower horizontal level (112) of the MLP (110) move to the 2nd level of the transport network (260), from the 2nd level of the MLP to the 3rd level of the transport network... from the 5th level of the MLP to the 6th level of the transport network and so on. This illustration shows how one of the MTUs from the lower levels of the system departs from the MLP to the processing point level (e.g. third from bottom). Similarly, at the same time as leaving MLP (110), other MTUs (300) that need to move between storage levels may also enter from the second side of the MLP.

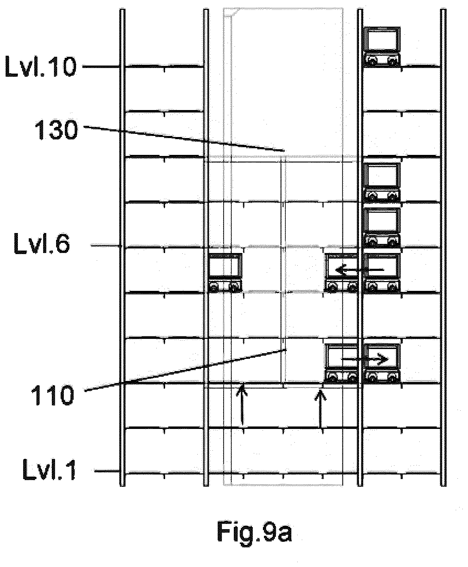

Fig. 9a shows a third position of the MLP (110) to which it moves vertically, non-stop from the second position. After this movement, the horizontal levels (112) of the MLP (110) will correspond to levels 3-7 of the transport network (260), where similar movements of the MTU (300) between the MLP and the transport network take place.

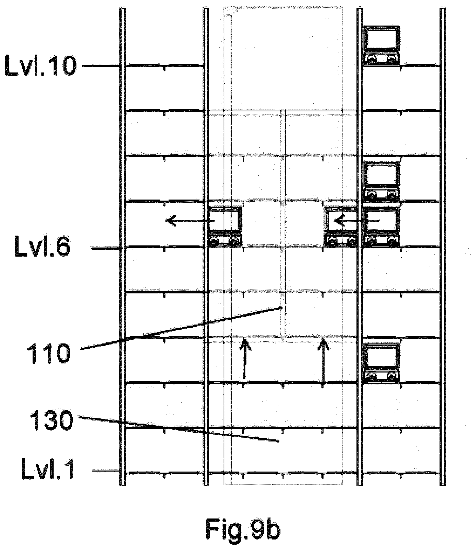

Fig. 9b shows a fourth position of the MLP (110), to which it moves vertically, non-stop from the third position. After this movement, the horizontal levels (112) of the MLP (110) will correspond to levels 4-8 of the transport network (260), where similar movements of the MTU (300) between the MLP and the transport network take place.

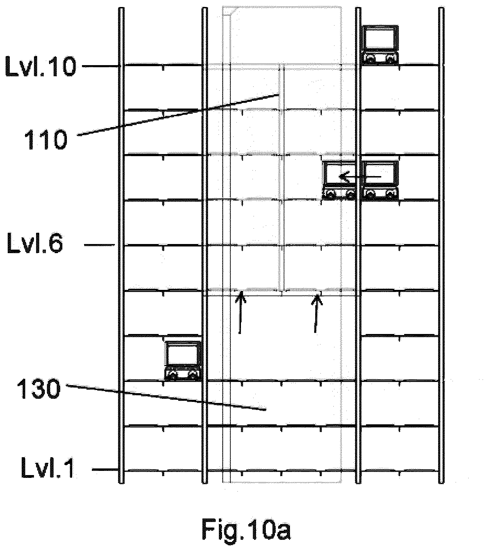

Fig. 10a shows a fifth position of the MLP (110), to which it moves vertically, non-stop from the fourth position. After this movement, the horizontal levels (112) of the MLP (110) will correspond to levels 5-9 of the transport network (260), where similar movements of the MTU (300) between the MLP and the transport network take place.

As can be seen from the illustrations, if the lift MLP stops consecutively on each level as it rises up, the MTUs from levels 4,5,6,7 and 8 can drive directly onto level 3 of the MLP, which when the MLP is moved to the lower position will automatically move the MTUs standing on that level to the processing site level, greatly speeding up delivery of trays to it.

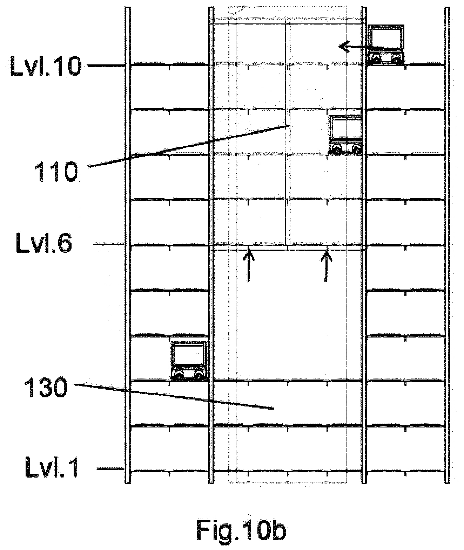

Fig. 10b shows the upper position of the MLP (110), a sixth position to which it moves vertically, non-stop from the fifth position. After this movement, the horizontal levels (112) of the MLP (110) will correspond to levels 6-10 of the transport network (260), where similar movements of the MTU (300) between the MLP and the transport network take place. In the figures a variant of the system with a storage area height of 10 levels is proposed. According to the proposed way of working, if a system with a height of 20 or more levels were proposed, the next steps would be similar to this and the previous one, until MLP (110) reaches the top level of the system.

Fig. 8a shows the starting and closing position of the MLP (110) in the proposed system, where the MLP (110) is lowered from its up position to the down position in one continuous movement, without stopping at intermediate levels.

Moving directly to the bottom position is due to the fact that the object processing location (290), is preferably located exactly on level 3, and according to the logic of the system most of the tasks for the MTU (300) (in the region of 90%), related to the movement between storage levels, come from the transport of objects between the object processing location (290) and the storage area (200).

Figs. 11, 12, 13 show a complex variant of transport mobile units (300) movement organisation by levels in the lift operation zone (100). As it can be seen in the figures, for organisation of movement of transport mobile devices (300) in the zone of lift (100) operation, transport networks (250) and (260) should have width of bypass of MLP of lift not less than two steps of regular transport network. It is also clear from the figures that a unidirectional movement of the MTU (300) is preferable when entering and exiting the MLP of the lift. It is also clear from the figures that the described storage and handling system uses three traffic patterns in the lift operating area (100) depending on the level of the storage area and the transport network.

Thus, Fig. 11 shows the traffic organisation diagram for traffic levels 1 and 2, thus the levels below the level with the processing point, where the traffic network (260) is present but there is no processing point (290). Thus, it can be seen that the exit of the MTU (300) from MLP (110) is below and the entrance is above it. The direction of travel of the MTU (300) on MLP (110) at these levels of transport networks (250) and (260) is north-south. This organisation of the MTUs (300) at these levels is organised on the basis that these levels are designed to distribute all the MTUs (300) brought in or taken out by the MLP in the desired height and to speed up this process, the distances between the MLP's exit/entry should be kept to a minimum.

Fig. 12 shows the traffic organisation at Transport Network Level 3, where the transport network (260) and the treatment site (290) are present, because this is where all the MTUs (300) with troughs (001) are delivered to the treatment sites. The direction of travel of the MTU (300) to the MLP (110) at these transport network levels (250) and (260) is from north to south.

Fig. 13 shows the traffic organisation on Level 4 and above, thus the levels above the level with the processing point where only the MLP (110) of the lift (100) operates and there is no transport network (250) covering it. At MLP (110) the unidirectional traffic of the MTU (300) is also organised, but an important difference from the traffic at the lower levels is its 180 degrees turn, which is conditioned to reduce the arrival and departure time of the MTU (300) from MLP (110). It turns out that those MTUs (300) that enter MLP (110) on the upper tiers in the second bottom-up direction in Figure 13, accumulate at the lower edge of MLP (110), and they need to be moved down to make processing of objects in trays on their board, and there this edge of MLP (110) is an exit, which significantly reduces the length of their movement and saves time. The situation is similar with the approach of the MTU (300) on the lower levels to move up the system.

This system is designed to ensure that the trays are moved from the storage area (200) to their processing points (290) in the correct/desired sequence and the processed trays are returned back to the storage area (200).

Figs. 14 and 15 show a possible variant of an (high-rise) object storage and handling system with multiple (cascade) lifts (1100) configured to operate at least one transport mobile device (300). As can be seen from the figures, the object storage and handling system preferably includes at least one of
- a multi-level storage area (200) with an integrated transport network in which multiple trays (001) with objects are arranged at the storage locations in two horizontal mutually perpendicular directions A and B,
- a plurality of transport mobile units (300) designed to independently pick up and move trays (001) containing objects in two mutually perpendicular horizontal directions A and B along the transport network both inside and outside the storage area (200),
- several (cascade) lifts (1100) designed to transport mobile units (300) between levels of storage area (200), connected to storage area (200) by transport networks (250) and (260) via two adaptor rows (280) designed to organize unidirectional movement each,
- several locations for processing objects (290).

The figure also shows several transport mobile units (300) located in different parts of the above system.

Figs. 16 and 17 show an enlarged view of a single (cascade) lift operating area (1100). Figures 16 and 17 show an enlargement of a single (cascade) lift (1100) with the adjacent part of the storage area (200). The drawings show that each (cascade) lift (1100) has two-tiered loading platforms (MLPs), a main one (1110) and an additional one (1120). At least one of the loading platforms may correspond to the loading platform 110 of the first embodiment. As can be seen in figure 3 the main MLP (1110) of the (cascade) lift (1100) can be located as close as possible to the one-way adaptation lanes (280) and is connected to them at all levels by a transport network (260) spread over the entire height of the storage system. An additional MLP (1120) (cascading) lift (1100) is preferably located further away from the storage area in the first horizontal direction, and may be linked to it by a transport network (250) extending to the lower 5 storage levels only through the adjoining transport network (260) and the adapting lanes (280). As can be seen in Figure 17, the transport network (260) is adjacent to the main MLP (1110) in the second horizontal direction (above and below the MLP in the figure) and the transport network (250) is adjacent to the additional MLP (1120) in both the second (above and below the MLP in the figure) and first (right of the MLP in the figure) horizontal direction, thus covering it in a half ring. The two transport networks (250) and (260) each have two rows, allowing two or more mobile units (300) to pass each other and not only each other. On the right side of the first horizontal direction to the transport network (260), there is an operator station (290) docked e.g. on the third level or any other level.

Fig. 18 shows a variant of (cascade) lift design (1100). As can be seen from the figure, the (cascade) lift (1100) may comprise a vertical post (1130) serving as a device base and a vertical guide for the movement of the MLP, two MLPs, a main MLP (1110) and an additional MLP (1120) moving independently of each other in the vertical direction along the post (1130), which may be cantilevered and arranged on opposite sides of the vertical post (1130) in the first horizontal direction. The main MLP (1110) of the (cascade) lift is provided for moving the MTU (300) between all levels of the storage system, and comprises a body (1111) and preferably five horizontal levels (1112) attached thereto, made with vertical and horizontal steps coinciding with the intervals of the transport network (260), allowing the MTU (300) to enter and exit all its horizontal levels (1112) in the second horizontal direction. The area of each horizontal level (1112) of the main MLP (1110) allows preferably up to eight or more transport mobile units (300) to be accommodated simultaneously on each level, either empty or with a box on each of them. The dimensions of one horizontal level (1112) in horizontal transport steps may be (n.1*n.2 = 2*4). The vertical operating stroke of the main (cascade) lift (1100) MLP (1110) allows it to move either one or many MTU (300) at a time, between all storage levels of the system. An additional (cascade) lift RPM (1120) is provided to move the MTUs (300) between preferably the lower five tiers of the storage system, such that any MTUs (300) located in, or brought into, any of the preferably lower five tiers may be delivered to any one of the tiers by the primary MLP (1110). The additional MLP (1120) of the (cascade) lift (1100) comprises a body (1121) and three horizontal levels (1122) attached thereto, made with vertical and horizontal steps coinciding with the intervals of the transport network (250), enabling the MTU (300) to enter and exit all its horizontal levels (1122) in the second and first horizontal directions. The area of each horizontal level (1122) of the additional MLP (1120) allows preferably up to eight or more transport mobile units (300) to be accommodated on each level simultaneously, either empty or up to with a tray on each of them. The dimensions of one horizontal level (1122) in horizontal transport steps (n.1*n.2 = 2*4). The vertical working stroke of the main MLP (1120) of the (cascade) lift (1100) allows it to move both one and many MTUs (300) at a time, between the preferably lower five storage levels of the system.

It is also clear from the presented invention that the (cascade) lift variant (1100) shown in the figure can also be made with multiple pillars and with non-cantilevered MLPs. In addition, it is understood from the invention that the area of the horizontal MLP levels of the lift and their number can also be different. The MTU as depicted in the first embodiment may also be used for the second embodiment of the invention.

Figs. 19, 20 show step by step how the main MLP (1110) of the (cascade) lift (1100) works.

Thus, Fig. 19a shows the main MLP (1110) of the (cascade) lift (1100) in its lowest position. In this position, the horizontal levels (1112), of the main MLP (1110) coincide preferably with the lower five levels of the transport network (260), levels 1 to 5, which allows the transport mobile devices (300), from the lift MLP to move to the adjacent transport network, according to the occupied horizontal level (1112) each MTU (300) will move to a similar level of the transport network (260). After a part of the MTU (300) leaves the main MG of the (cascade) lift (1110) and another part of the MTU (300) conversely moves from the transport network (260) to it, the main MLP (1100) of the lift may move without intermediate stops to the position depicted in Figure 19b.

Fig. 19b shows the main MLP (1110) of the (cascade) lift (1100) in a second vertical position, with its horizontal levels (1112) corresponding to levels 6 to 10 of the storage system. The MTUs (300) on the lower horizontal level (1112) of the main MLP (1110) are thus moved to the 6th level of the transport network (260), from the second MLP level to the 7th level of the transport network... from the 5th level of the MLP to the 10th level of the transport network and so on. Similarly, at the same time as leaving a MLP level (1110), other MTUs (300) that need to move between storage levels may also arrive on its second/opposite side.

Fig. 20a shows a third position of the main MLP (1110) to which it moves vertically, non-stop from the second position. Following this movement, the horizontal levels (1112) of the MLP (1110) will correspond to levels 11-15 of the transport network (260), where similar movements of the MTU (300) between the MLP and the transport network take place. In the figures a variant of the system with a storage hight of 15 levels is proposed. According to the proposed variant of the method, if a system with a height of 20 or more levels was proposed, the next steps would be similar to this and the previous one, until MLP (1110) reaches the top level of the system.

Fig. 20b shows the final position of the main MLP (1110) closing its working cycle, a fourth position in the proposed system in which the MLP (1110) descends from its upper position to the lower position in one continuous movement, without stopping at intermediate levels.

The movement immediately to the lower position is due to the fact that the object processing location (290), is located at the bottom preferably exactly on level 3, and according to the logic of the system most of the tasks for the MTU (300) (in the region of 90%), related to the movement between storage levels, come to the transportation of objects between the object processing location (290) and the storage area (200).

Figs. 21 and 22 show, step by step, how the additional MLP (1120) of the (cascade) lift (1100) works.

Fig. 21 shows the additional MLP (1120) of the (cascade) lift (1100) in the lower position. It can thus be seen that the horizontal levels (1122) of the MLP coincide preferably with the lower three levels of the storage system. The MTUs (300) on the transport network (250) enter the MLP (1120) and vice versa exit the MLP (1120) on the transport network (250) depending on the task to be performed. Entry and exit from the MTUs takes place simultaneously on three levels of the transport network (250). The third level of the transport network (250) is preferably where the object processing point (290) is located. Thus placing the heaviest load on the third level/on that level of the system. Therefore, the MLP (1120) has so many horizontal levels (1122) that in each of its positions at least one level of the MLP (1120) coincides with the busiest level of the transport network (250) (in the version shown in the figures with the third level).

In Fig. 21b the additional MLP (1120) rises 1 level up, aligning the horizontal levels (1122) of the MLP with the 2-4(x) levels of the transport network (250) depending on its (1120) number of levels, along which the MTUs (300) travel in both directions to and from the MLP.

Fig. 22a shows the additional MLP (1120) in its upper position where its horizontal levels (1122) are paired with the 3-5(x) levels of the transport network (250). The working height of the additional MLP (1120) may be limited by the height of the main MLP (1110) of the (cascade) lift (1100).

Thus, when the main MLP and the additional MLP work together, the additional MLP provides the required distribution preferably over the lower five (x) levels of transport systems (250) and (260) of transport mobile units (300), which in turn move to the main MLP already at the required level for their subsequent operation over the transport networks (250) and (260), while the main MLP (1120) steps the MTUs that are on their horizontal levels (1112) to the required storage system level over its entire height. Thus, the use of a (cascade) lift (1100) with multi-level MLPs (1110) and (1120), together with the transport networks (250), (260) and adaptor rows (280), provides a higher speed system with 10 or more storage levels than a system with ramp tracks and a storage system equipped with standard freight lifts. However, it may generally also be used with lower level storage facilities.

In Fig. 22b the additional MLP (1120) returns one level down, aligning its horizontal levels (1122) with the 2-4(x) levels of the transport network (250). The additional MLP (1120) thus moves up and down, stopping at each successive level. In the above embodiment, the additional MLP (1120) has preferably three horizontal levels (1122), and operates between levels 1 to 5(x) of storage, its entire operating cycle being successive movements of two levels up, starting at the bottom position, and then two levels down, returning the MLP to its original state. During a stop in each position, transport mobile units (300) enter and exit the MLP.

Figs. 23, 24, 25 show a complex variant of transport mobile units (300) movement organisation by levels in the zone of (cascade) lift (1100) operation. As it can be seen in the drawings, for organization of movement of MTUs (300) in zone of (cascade) lift (1100) operation, transport networks (250) and (260) should have width of bypass of MLP of lift not less than two steps of regular transport network. It is also clear from the figures that a unidirectional movement of the MTU (300) is preferable when entering and exiting from each MLP of the lift. It is also clear from the figures that the described version of the storage and handling system uses preferably three traffic patterns in the (cascade) lift operating area (1100) depending on the level of the storage area and the transport network.

Thus, Fig. 23 shows the traffic organisation on Levels 1,2,4 and 5(x) of the transport network, where both MLPs of the (cascade) lift (1100) operate simultaneously. Thus, it can be seen that the exit of the MTU (300) from the additional MLP (1120) and the entrance to the main MLP (1110) are preferably adjacent, as well as the exit from the main MLP (1110) and the entrance to the additional MLP (1120). The direction of traffic of the MTU (300) at the main MLP (1110) and the additional MLP (1120) is preferably divergent at these levels of the transport networks (250) and (260). This organisation of the MTUs (300) on these levels is organised on the basis that these levels are designed to distribute all the MTUs (300) brought in or taken out by the MLP in the correct height and to speed up this process the paths between the MLP exit/entry points should be kept to a minimum.

Fig. 24 shows the traffic organization scheme on the 3rd level, thus the object processing location level, of transport networks, where both MLPs of (cascade) lift (1100) also operate, but there is an essential difference, because on the 3rd level, the object processing location level, the place of objects processing (290) is connected to the transport networks, because all MTU (300) with trays (001) for objects processing are delivered exactly here. It is clear to the person skilled in the art, that the object processing location level may also be different from level 3, e.g. 1, 2, 4, 5, 6, 7, preferably depending oin the hight of the levels. This is why the (cascade) lift (1100) with directional removal of the MTUs (300) from both MLPs and their return to the MLPs at the other end of the machining line is routed to the (cascade) lift (1100). Using this arrangement, the movement of the MTU (300) between MLPs is significantly slower, but because it gives priority to the movement of the MTU (300) from both MLPs of the (cascade) lift (1100) to the point of processing (290), it is fully justified at this level.

Fig. 25 shows the traffic organisation on levels 6 and above of the transport network, where only one main MLP (1110) of the (cascade) lift (1100) operates. The main MLP (1110) may be organized to also have a unidirectional movement of the MTU (300), but a preferred difference from the movement on the lower levels is its 180 degrees turn, which is conditioned to reduce the time of arrival and departure of the MTU (300) from the MLP (1110). It turns out that the MTUs (300) entering MLP (1110) on the upper tiers in the second bottom-up direction in Figure 14 are crowded at the lower edge of MLP (1110), and they need to be moved down to the trays on their board, where this edge of MLP (1110) is the exit, which significantly reduces the length of their travel and saves time. The situation is similar with the approach of the MTU (300) on the lower levels to move up the system.

Figs. 26-31 show one more variant of realization of a (cascade) elevator (1100) and a layered variant of the TMU movement organization (300) in the zone of its work.

The variant of the (cascade) elevator (1100) proposed in the drawings may also have two or more multilevel cargo platforms (MLP): The first (1110) and the second (1120). Both MLPs may be equal in functionality and operating range. The figure also shows the elevator transport network and the handling area (290) of the objects stored in the trays (001).

Fig. 26 shows a single (cascade) elevator (1100) integrated into the system with an adjacent transport network (250) and a processing location (290). As shown, the (cascade) elevator (1100) contains two identical tiered cargo platforms (1110) and (1120), which are on different sides relative to the vertical elevator carrier post (1130). The object handling area (290) may be located on a middle storage level of the system, in the example shown in the figure on the fifth of eleven levels. The transport network (250) adjacent to the elevator at all storage levels may provide the TMU (300) with access to the MLPs (1110, 1120) of the (cascade) elevator from preferably two (opposite) sides, and/or at the processing place location level (290), it is supplemented by the transport network (260), which allows access to each MLP (1110, 1120) preferably from three sides. In addition, at the location level of the processing site (290), there are transport paths (270) connecting the processing site (290) to the elevator transport network (250), which preferably includes several rows of tracks. Likewise, the figure shows several transport mobile devices (300) located at different locations in the above-described section of the system.

Fig. 27 shows a variant version of the (cascade) elevator (1100). As can be seen in the figure, the (cascade) elevator (1100) may comprise a vertical rack (1130) that serves as a device base and a vertical guide for MLP movement, two MLPs, a first (1110) and a second (1120), moving independently of each other in a vertical direction along the rack (1130), which may be cantilevered and located on different sides of the vertical rack (1130) in the first horizontal direction. The first MLP (1110) of the (cascade) elevator (1110) is designed to move the TMU (300) between all levels of the storage system, and may comprise a body (1111) and e.g five horizontal levels (1112) attached thereto, made with vertical and horizontal steps that coincide with the frequency of the transport network (260), allowing the TMU (300) to enter and exit all its horizontal levels (1112) in both horizontal directions, first and second. The area of each horizontal level (1112) of the first MLP (1110) allows multiple, preferably up to two transport mobile units (300), either empty or with a tray on each level simultaneously. The dimensions of one horizontal level (1112) in horizontal transport network steps (n.1*n.2 = 1*2). The vertical operating stroke of the first MLP (1110) of the (cascade) elevator (1100) allows it to move both one and many MLPs (300) at a time, preferably between all storage levels of the system. The second MLP (1120) of the (cascade) elevator (1100), in this embodiment of the device, is no different from the first MLP (1110), and is also designed to move the DMUs (300) between all levels of the storage system. The second MLP (1120) of the (cascade) elevator (1100) may comprise a body (1121) and e.g. five horizontal levels (1122) attached thereto, made with vertical and horizontal steps coinciding with the intervals of the transport network (260), allowing the TMU (300) to enter and exit all its horizontal levels (1122) in both horizontal directions, first and second. The area of each horizontal level (1122) of the second MLP (1120) allows multiple, preferably up to two transport mobile units (300), either empty or with a tray on each level simultaneously. The dimensions of one horizontal level (1122) in horizontal transport steps (n.1*n.2 = 1*2). The vertical working stroke of the second MLP (1120) of the (cascade) elevator (1100) allows it to move both one and many MLPs (300) at a time, preferably between all storage levels of the system.

Fig. 28 shows a side view of a (cascade) elevator (1100) integrated into the system with its adjacent transport network (250) and processing space (290). As seen in this view, the first tiered cargo platform (1110) of the (cascade) elevator (1100) is preferably located closer to the processing location (290) than the second MLP (1120), which is on the other side relative to the supporting vertical elevator post (1130). The object processing location (290) may be located on the fifth storage level of the system, and it is this level, with respect to this embodiment, that is the processing level. In addition, preferably only the processing level contains, in addition to the transport network (250) adjacent to the (cascade) elevator (1100), an additional transport network (260) as well as transport paths (270) that provide the required functionality of the system. Thus, the additional transport network (250) allows the MTUs (300), to bypass the MLPs (1110, 1120) on a third side, and to enter or exit them from it. Transport paths (270) located at the treatment level enable the MTUs (300) to move to the treatment site (290), and also enable the MLPs (250) to exit from the treatment site to the elevated transport network (250). Likewise, the figure depicts several transport mobile devices (300) located at various locations in the above-described section of the system, particularly at MLPs (1110, 1120), as well as at the processing site (290).

In this figure, the first MLP (1110) is shown in its upper position and the second MLP (1120) in its lower position. The presence of two identical MLPs (1110, 1120) allows organizing another variant of the method of operation of the (cascade) elevator (1100), which differs from the above.

Thus, in this method, the first MLP (1110), receives on its horizontal levels (1112) the TMU (300) in the upper part of the system, which is above the processing level (in the above example it is the fifth level of the system), then with steps equal to moving one level down, where:
at levels above the processing level (in the presented embodiment this is levels 6-10), the TMU (300) is moved from the transport network (250) to the horizontal levels (1112) of the first MLP (1110);
at the processing level (in the presented embodiment it is level 5), brought from above the DMUs (300), are moved from the corresponding horizontal level (1112) of the first MLP (1110) to the transport network (250), on which further through the transport routes (270) are moved to the place of processing (290), while the MTUs (300) that have been processed and need to be moved down, on the contrary, arrive at the corresponding horizontal level (1112) of the first MLP (1110) from the additional transport network (260) at levels of the system below the processing level (in the presented embodiment, these are levels 1-4), brought in from the processing level of the MLPs (300), drive out from the horizontal levels (1112) of the first MLP (1110) to their respective levels of the transport network (250).

After the first level of the transport network (250) is reached by the first horizontal level (1112) of the first MLP (1110), and after the first MLP (1110) is completely free of the TMUs (300) on it, it, in one movement, moves to its upper position, thus closing its work cycle.

Thus, it can be seen that in this mode of operation of the (cascade) elevator (1100), the first MLP (1110) serves to move the TMU (300) vertically downward.

For the vertical movement of the TMU (300) upwards in this way of operation of the (cascade) elevator (1200), the second MLP (1120), which operates similarly to the first MLP (1110), only mirroring it.

Thus, the second MLP (1120) of the (cascade) elevator (1100), in steps equal to one level, moves upward from its lower position, and having reached its upper position, and having freed itself from all the MTUs (300) on it, moves to its lower position in one movement, closing its work cycle, while at the system levels below the processing level (in the presented embodiment, these are levels 1-4), the TMU (300) is moved from the transport network (250) to the horizontal levels (1122) of the second MLP (1120);
at the processing level (in the presented embodiment it is level 5), the MTUs (300) brought from below, are moved from the corresponding horizontal level (1122) of the second MLP (1120) to the transport network (250), along which they further move to the place of processing (290) via transport routes (270), while the MTUs (300) that have been processed and need to be moved up, in contrast, arrive at the corresponding horizontal level (1122) of the second MLP (1120) from the additional transport network (260) at levels above the processing level (in the presented embodiment, these are levels 6-10), brought in from the processing level of the MLPs (300), drive in from the horizontal levels (1122) of the second MLP (1120) to their respective levels of the transport network (250).

As the above method shows, the presence of the first and second MLPs allows the full integrated operation of the bottlenecks of the automatic storage and processing system, which are the descent/lifting of the TMU (300) and the processing of objects inside the trays (001). In addition to the above method of implementing the operation of both MLPs (1110, 1120) of the (cascade) elevator (1100), the elevator transport networks (250, 260, 270) play an important role, as well as the organization of traffic in them so as to facilitate traffic as much as possible by minimizing the number of crossing points of the TMU trajectories (300) along them.

Figs. 29, 30, 31 show the traffic patterns of the TMU (300) on the transport networks in the elevator zone, depending on the level of location of these transport networks. As can be seen in the figures, to organize the movement of the TMU (300) in the (cascade) elevator zone (1110), it is preferable to use unidirectional movement of the TMU (300) when entering and exiting from each MLP. Also, from the figures it can be seen that the described variant of the system of storage and processing of objects uses three traffic organization schemes in the area of the (cascade) elevator (1110), depending on the level of the transport network.

Thus, Fig.29 shows the scheme of traffic organization on levels 1,2,3 and 4 of the transport network (250), located below the level of processing. As shown in the figure, entry or exit from each of the MLPs is in two directions. Thus, the first MLP (1110), according to the method shown in the example, performs its full unloading at these levels, as it is intended to move the MTUs (300) down (from it the MTUs (300) only exit at all 4 lower levels). At the same time the second MLP (1120), designed to move the TMU (300) upwards, and on the lower levels only loaded, i.e. the TMU (300) only drive into it.

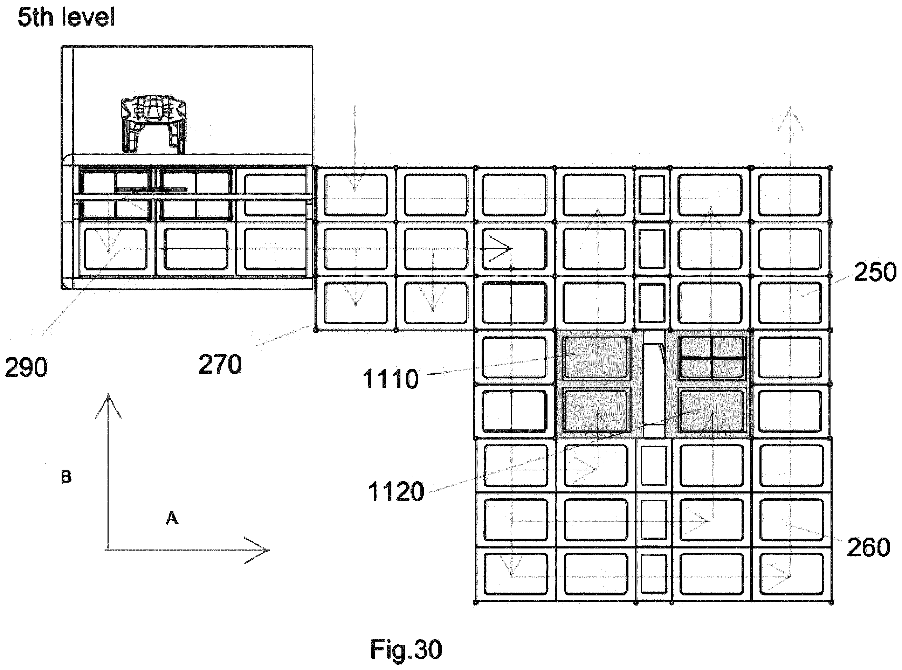

Fig.30 shows the traffic organization scheme on e.g. the 5th level of the transport networks - thus the level of placement of the processing place (290). This level of the system is the busiest. And it is at this level of the transport networks that the TMUs (300) both exit from both MLPs (from the first and the second) and enter them, according to their further destination. Thus, if the TMU (300), after processing, needs to move down, it drives up e.g to the first MLP (1110), and if up, it drives up e.g to the second MLP (1120). To reduce the number of places where the trajectories of the MTUs (300) intersect, a one-way scheme for the movement of the MTU (300) along the processing level, shown in Fig. 30, is proposed. According to it, the TMUs (300) leaves the first MLP (1110) and the second MLP (1120) up the figure in the second direction, reaching the upper row of the transport network (250), along which, following to the left in the first direction, crossing the transport tracks (270), they get to the processing place (290). From the place of processing (290) the MTUs (300) preferably leave in the first direction to the right along the second upper row and through the transport ways (270) reach the transport network (250), along which, moving already in the second direction down, they reach the additional transport network (260), along which they approach the first MLP (1110) and the second MLP (1120) along different rows from below and come in on this side.

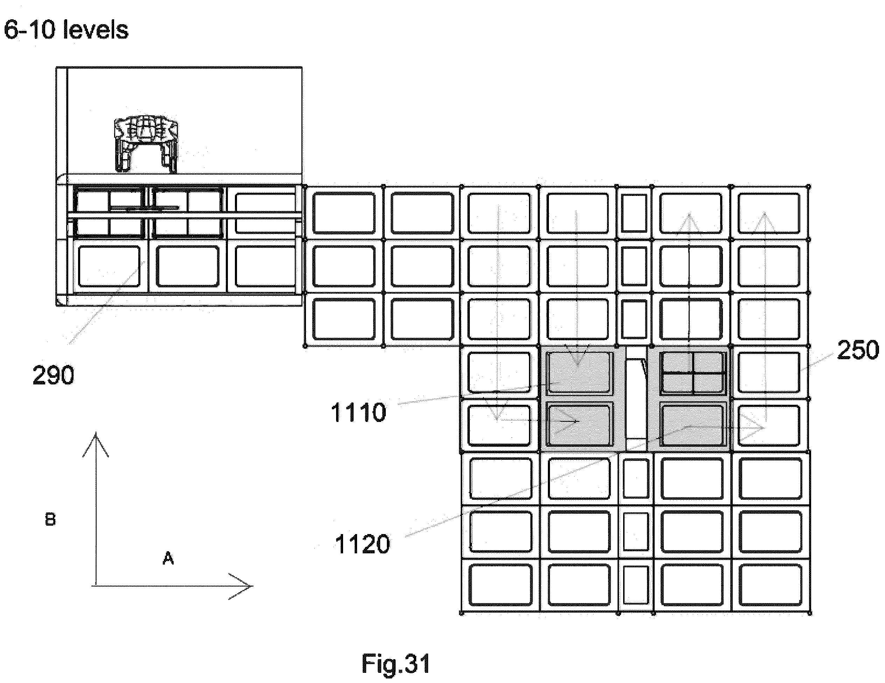

Fig. 31 shows a traffic pattern e.g. on levels 6 - 10 of the transport network (250), thus above the level of the processing place (290) where the direction of movement of the MLPs (300) with MLPs is opposite to their movement on the lower levels from the same. Thus, on the first MLP (1110), the TMUs (300) enter from two directions, for their further transportation down. At the same time, the TMUs (300) delivered to the top of the second MLP (1120) leave it.

Thus, at all horizontal levels, a scheme of movement of the TMUs (300) along the transport networks (250, 260, 270) in the elevator zone with a minimum number of crossings of the trajectories of their movement is organized.

In addition to the description of the variant shown in Figures 26-31, we should highlight the following some of its features:
In the example shown in the figures there is a system containing 10 levels of the transport network, in such a system there is not one clearly defined middle level, here there are two - 5th and 6th, and according to the proposed concept of this variant any of them can be chosen as a level of object processing. Also, a level in the upper half of the storage system or the highest level can be chosen as the processing level, which could have utility e.g. if the cargo/boxes (001) was delivered from the top to the system. If the processing level is located in the upper half of the storage system levels, it can be advisable to have the number of levels on the MLP in accordance with the number of levels the processing level is distant from the top level instead of from the bottom level.

Besides, in the given description of step-by-step operation of the first and second MLP of the (cascade) elevator (1100), their operation is described separately - it is made for clarity, and does not mean that MLPs (1110 and 1120) work alternately. In the real system, both MLPs (1110, 1120) of the (cascade) elevator (1100) operate simultaneously.

Also, in the example above, it is stipulated that the first MLP (1110) moves the TMU (300) from top to bottom, while the second MLP (1120) provides the lift of the TMU (300) from bottom to top. The purpose of the MLP for lifting and for lowering the TMU (300) is not fundamental, but in this way of operating the (cascade) elevator (1100), it is the presence of two MLPs of different orientation that make it a complete device.

In the example shown, both MLPs of the (cascade) elevator (1100) each contain 5 horizontal levels (1112, 1122) and one row each, which is done on purpose to draw attention to their sameness. At the same time, the number of MLP levels and rows in them may differ from those given in the example, both in number and in sameness.

It is also clear that this section of the approximate (cascade) elevator (1100) transport network (250), and the (cascade) elevator itself (1100) connected to the processing location (290), is part of the storage system that is described in the text earlier, and depicted in its previous drawings.

Subsequently it is provided a list of differences between the (cascade) elevator (1100) embodiment shown in Figures 26-31 and the embodiments previously presented in the application:
1) The processing location (290) is not on a lower storage level, but on a middle range storage level of the system (or one of the two middle levels if the number of levels in the system is even).
2) Both (cascade) elevator MLPs, first and second, are equal in functionality and operating range, both operating on all levels of the storage system.
3) The elevator transport network (250, 260, 270) is much simpler than the previous options.
4) The way the MLP (cascade) elevator (1100) works is different.
5) The organization of MLP movement (300) in the elevator transport network is different.

## Claims

1. Storage system (200) comprising
- multiple storage levels with each multiple storage spaces for storage boxes (001)
- multiple mobile transport units (300) for transportation of storage boxes between the storage spaces and a processing point (290), which is a location for processing objects stored in said storage boxes (001)
- the processing point is located on one of the storage levels
- in each storage level a transportation network (250) of tracks is provided on which the mobile transport units are movable within each storage level
- the transportation networks (250) of the individual storage levels are connected by a lift (100/1100)
∘ the lift comprising a platform (110/1110) with 2, 3, 4, 5, 6 or more platform levels (112/1112)
∘ the number of levels (112/1112) of the platform is at least corresponding to the numeral of the storage level where the processing point (290) is located, thus the platform (110/1110) of the lift (110/1100) reaches in its lowest position the lowest storage level and at least the level on which the processing point (290) is located
∘ the platform levels (112/1112) have the same distance to one another as the storage levels have
∘ the platform (110/1110) is adapted to move vertically between the storage levels
∘ the platform (110/1110) is adapted to reach with its top platform level all storage levels that are above the platform (110/1110) in the platform's lowest position
∘ the platform is adapted to carry at least two mobile transport units per platform level simultaneously.

2. Storage system according to claim 1
**characterized in that**
the number of levels of the platform is at least one less than the number of levels of the storage system and/or
the platform is accessible by the mobile transport units from at least two sides, preferably opposite sides.

3. Storage system according to claim 1 or 2,
**characterized in that**
the lift (1100) comprises a second platform (1120) with several platform levels (1122), the platform levels (1122) have the same distance to one another as the levels of the storage space have.

4. Storage system according to claim 3
**characterized in that**
the number of levels (1122) of the second platform (1120) is at least corresponding to the numeral of the storage level the processing point (290) is located on.

5. Storage system according to claim 3 or 4
**characterized in that**
the number of levels (112/1112) of the first platform (110/1110) is equal or higher than the number of levels (1122) of the second platform (1120).

6. Storage system according to any of claims 3 to 5
**characterized in that**
the second platform (1120) is adapted to move vertically between the storage levels.

7. Storage system according to any of claims 3-6
**characterized in that**
the second platform (1120) is accessible by the mobile transport units from at least two sides, preferably three sides.

8. Storage system according to any preceding claim
**characterized in that**
the platforms (110/1110/1120) and the storage spaces are connected via two, preferably parallel, lanes of tracks.

9. Method of transportation of the multiple mobile transport units (300) within a storage system according to any of claims 1 to 8 **characterized in that** while the levels of a platform are aligned with levels of the storage system
- mobile transport units (300) enter the platform (110/1110) from one side and/or exit the platform (110/1100) to an opposite side from multiple levels of the storage system at the same time
- the platform moves at least one level of the storage system up or down
- at least some of the mobile transport units (300) that have entered the platform before leave the platform, if their destination storage system level is reached
- mobile transport units that stay on the platform move towards the exit side of the platform in order to make space for further entering mobile transport units (300) entering the platform on the new storage level.

10. Method of transportation of the multiple mobile transport units, according to claim 9 within the storage system according to any of claims 3 to 8
**characterized in that**
the second platform (1120) is operated in the same way as the platform, such that at least one level of the second platform (1120) aligns with the storage level on which the processing point (290) is located thereby taking over the extra load from levels that neighbour the level of the processing point (290).

11. Method according to claim 10
**characterized in that** the mobile transport units are moved unidirectionally when entering, exiting and/or moving around the lift, preferably moving unidirectionally in the whole storage system.

## Patentansprüche

1. Lagersystem (200), umfassend
mehrere Lagerebenen mit jeweils mehreren Lagerplätzen für Lagerbehälter (001)
mehrere mobile Transporteinheiten (300) zum Transport von Lagerbehältern zwischen den Lagerplätzen und einem Bearbeitungspunkt (290), der ein Ort zur Bearbeitung von in den Lagerbehältern (001) gelagerten Objekten ist
der Bearbeitungspunkt befindet sich auf einer der Lagerebenen
in jeder Lagerebene ist ein Transportnetzwerk (250) aus Schienen vorgesehen, auf denen die mobilen Transporteinheiten innerhalb jeder Lagerebene beweglich sind
die Transportnetzwerke (250) der einzelnen Lagerebenen sind durch einen Aufzug (100/1100) verbunden
der Aufzug umfasst eine Plattform (110/1110) mit 2, 3, 4, 5, 6 oder mehr Plattformebenen (112/1112)
die Anzahl der Ebenen (112/1112) der Plattform entspricht mindestens der Zahl der Lagerebene, auf der sich der Bearbeitungspunkt (290) befindet, sodass die Plattform (110/1110) des Aufzugs (110/1100) in ihrer niedrigsten Position die unterste Lagerebene und mindestens die Ebene erreicht, auf der sich der Bearbeitungspunkt (290) befindet
die Plattformebenen (112/1112) haben den gleichen Abstand zueinander wie die Lagerebenen
die Plattform (110/1110) ist so ausgelegt, dass sie sich vertikal zwischen den Lagerebenen bewegen kann
die Plattform (110/1110) ist so ausgelegt, dass sie mit ihrer obersten Plattformebene alle Lagerebenen erreicht, die sich über der Plattform (110/1110) in ihrer niedrigsten Position befinden
die Plattform ist so ausgelegt, dass sie mindestens zwei mobile Transporteinheiten pro Plattformebene gleichzeitig tragen kann.

2. Lagersystem nach Anspruch 1
**dadurch gekennzeichnet, dass**
die Anzahl der Ebenen der Plattform mindestens um eins geringer ist als die Anzahl der Ebenen des Lagersystems und/oder
die Plattform für die mobilen Transporteinheiten von mindestens zwei Seiten, vorzugsweise gegenüberliegenden Seiten, zugänglich ist.

3. Lagersystem nach Anspruch 1 oder 2,
**dadurch gekennzeichnet, dass**
der Aufzug (1100) eine zweite Plattform (1120) mit mehreren Plattformebenen (1122) umfasst, wobei die Plattformebenen (1122) den gleichen Abstand zueinander haben wie die Ebenen des Lagerraums.

4. Lagersystem nach Anspruch 3
**dadurch gekennzeichnet, dass**
die Anzahl der Ebenen (1122) der zweiten Plattform (1120) mindestens der Zahl der Lagerebene entspricht, auf der sich der Bearbeitungspunkt (290) befindet.

5. Lagersystem nach Anspruch 3 oder 4
**dadurch gekennzeichnet, dass**
die Anzahl der Ebenen (112/1112) der ersten Plattform (110/1110) gleich oder höher ist als die Anzahl der Ebenen (1122) der zweiten Plattform (1120).

6. Lagersystem nach einem der Ansprüche 3 bis 5
**dadurch gekennzeichnet, dass**
die zweite Plattform (1120) so ausgelegt ist, dass sie sich vertikal zwischen den Lagerebenen bewegen kann.

7. Lagersystem nach einem der Ansprüche 3-6
**dadurch gekennzeichnet, dass**
die zweite Plattform (1120) für die mobilen Transporteinheiten von mindestens zwei Seiten, vorzugsweise drei Seiten, zugänglich ist.

8. Lagersystem nach einem der vorhergehenden Ansprüche
**dadurch gekennzeichnet, dass**
die Plattformen (110/1110/1120) und die Lagerplätze über zwei, vorzugsweise parallele, Schienenbahnen verbunden sind.

9. Verfahren zum Transport der mehreren mobilen Transporteinheiten (300) innerhalb eines Lagersystems nach einem der Ansprüche 1 bis 8
**dadurch gekennzeichnet, dass**
während die Ebenen einer Plattform mit Ebenen des Lagersystems ausgerichtet sind
mobile Transporteinheiten (300) die Plattform (110/1110) von einer Seite betreten und/oder die Plattform (110/1100) zu einer gegenüberliegenden Seite von mehreren Ebenen des Lagersystems gleichzeitig verlassen
die Plattform sich mindestens eine Ebene des Lagersystems nach oben oder unten bewegt
mindestens einige der mobilen Transporteinheiten (300), die zuvor die Plattform betreten haben, die Plattform verlassen, wenn ihre Ziel-Lagersystemebene erreicht ist
mobile Transporteinheiten, die auf der Plattform bleiben, sich zur Ausgangsseite der Plattform bewegen, um Platz für weitere eintretende mobile Transporteinheiten (300) zu machen, die die Plattform auf der neuen Lagerebene betreten.

10. Verfahren zum Transport der mehreren mobilen Transporteinheiten nach Anspruch 9 innerhalb des Lagersystems nach einem der Ansprüche 3 bis 8
**dadurch gekennzeichnet, dass**
die zweite Plattform (1120) auf die gleiche Weise wie die Plattform betrieben wird, sodass mindestens eine Ebene der zweiten Plattform (1120) mit der Lagerebene ausgerichtet ist, auf der sich der Bearbeitungspunkt (290) befindet, wodurch die zusätzliche Last von Ebenen übernommen wird, die an die Ebene des Bearbeitungspunkts (290) angrenzen.

11. Verfahren nach Anspruch 10
**dadurch gekennzeichnet, dass** die mobilen Transporteinheiten unidirektional bewegt werden, wenn sie den Aufzug betreten, verlassen und/oder sich um ihn herum bewegen, vorzugsweise unidirektional im gesamten Lagersystem.

## Revendications

1. Système de stockage (200) comprenant
plusieurs niveaux de stockage avec chacun plusieurs espaces de stockage pour des boîtes de rangement (001)
plusieurs unités de transport mobiles (300) pour le transport des boîtes de rangement entre les espaces de stockage et un point de traitement (290), qui est un emplacement pour le traitement des objets stockés dans lesdites boîtes de rangement (001)
le point de traitement est situé sur l'un des niveaux de stockage
dans chaque niveau de stockage, un réseau de transport (250) de rails est prévu sur lequel les unités de transport mobiles peuvent se déplacer au sein de chaque niveau de stockage
les réseaux de transport (250) des différents niveaux de stockage sont reliés par un ascenseur (100/1100)
l'ascenseur comprenant une plateforme (110/1110) avec 2, 3, 4, 5, 6 ou plus de niveaux de plateforme (112/1112)
le nombre de niveaux (112/1112) de la plateforme correspond au moins au numéro du niveau de stockage où se trouve le point de traitement (290), ainsi la plateforme (110/1110) de l'ascenseur (110/1100) atteint dans sa position la plus basse le niveau de stockage le plus bas et au moins le niveau sur lequel se trouve le point de traitement (290)
les niveaux de la plateforme (112/1112) ont la même distance entre eux que les niveaux de stockage ont
la plateforme (110/1110) est adaptée pour se déplacer verticalement entre les niveaux de stockage
la plateforme (110/1110) est adaptée pour atteindre avec son niveau de plateforme supérieur tous les niveaux de stockage qui sont au-dessus de la plateforme (110/1110) dans sa position la plus basse
la plateforme est adaptée pour transporter au moins deux unités de transport mobiles par niveau de plateforme simultanément.

2. Système de stockage selon la revendication 1
**caractérisé en ce que**
le nombre de niveaux de la plateforme est au moins un de moins que le nombre de niveaux du système de stockage et/ou
la plateforme est accessible par les unités de transport mobiles d'au moins deux côtés, de préférence des côtés opposés.

3. Système de stockage selon la revendication 1 ou 2,
**caractérisé en ce que**
l'ascenseur (1100) comprend une deuxième plateforme (1120) avec plusieurs niveaux de plateforme (1122), les niveaux de plateforme (1122) ont la même distance entre eux que les niveaux de l'espace de stockage ont.

4. Système de stockage selon la revendication 3
**caractérisé en ce que**
le nombre de niveaux (1122) de la deuxième plateforme (1120) correspond au moins au numéro du niveau de stockage où se trouve le point de traitement (290).

5. Système de stockage selon la revendication 3 ou 4
**caractérisé en ce que**
le nombre de niveaux (112/1112) de la première plateforme (110/1110) est égal ou supérieur au nombre de niveaux (1122) de la deuxième plateforme (1120).

6. Système de stockage selon l'une quelconque des revendications 3 à 5
**caractérisé en ce que**
la deuxième plateforme (1120) est adaptée pour se déplacer verticalement entre les niveaux de stockage.

7. Système de stockage selon l'une quelconque des revendications 3-6
**caractérisé en ce que**
la deuxième plateforme (1120) est accessible par les unités de transport mobiles d'au moins deux côtés, de préférence trois côtés.

8. Système de stockage selon l'une quelconque des revendications précédentes
**caractérisé en ce que**
les plateformes (110/1110/1120) et les espaces de stockage sont reliés via deux voies de rails, de préférence parallèles.

9. Méthode de transport des multiples unités de transport mobiles (300) dans un système de stockage selon l'une quelconque des revendications 1 à 8
**caractérisée en ce que**
pendant que les niveaux d'une plateforme sont alignés avec les niveaux du système de stockage
les unités de transport mobiles (300) entrent dans la plateforme (110/1110) d'un côté et/ou sortent de la plateforme (110/1100) vers un côté opposé depuis plusieurs niveaux du système de stockage en même temps
la plateforme se déplace d'au moins un niveau du système de stockage vers le haut ou vers le bas
au moins certaines des unités de transport mobiles (300) qui sont entrées dans la plateforme auparavant quittent la plateforme si leur niveau de destination du système de stockage est atteint
les unités de transport mobiles qui restent sur la plateforme se déplacent vers le côté de sortie de la plateforme afin de faire de la place pour d'autres unités de transport mobiles (300) entrant sur la plateforme au nouveau niveau de stockage.

10. Méthode de transport des multiples unités de transport mobiles, selon la revendication 9 dans le système de stockage selon l'une quelconque des revendications 3 à 8
**caractérisée en ce que**
la deuxième plateforme (1120) est exploitée de la même manière que la plateforme, de sorte qu'au moins un niveau de la deuxième plateforme (1120) s'aligne avec le niveau de stockage sur lequel se trouve le point de traitement (290), prenant ainsi en charge la charge supplémentaire des niveaux voisins du niveau du point de traitement (290).

11. Méthode selon la revendication 10
**caractérisée en ce que** les unités de transport mobiles se déplacent de manière unidirectionnelle lors de l'entrée, de la sortie et/ou du déplacement autour de l'ascenseur, de préférence en se déplaçant de manière unidirectionnelle dans l'ensemble du système de stockage.
